# EUROPEAN PATENT SPECIFICATION

(11) **EP 4 423 148 B1**
(45) Date of publication and mention of the grant of the patent: **29.07.2026**
(21) Application number: 22812971.4
(22) Date of filing: 27.10.2022
(51) Int. Cl.: C08F 8/28, C08F 8/48, C08F 16/06, C08J 11/06, C08L 29/14, C08J 11/08, B32B 17/00, B29B 17/02, B32B 17/10

(54) **RECOVERING RECYCLED POLY(VINYL BUTYRAL) POLYMER**
RÜCKGEWINNUNG VON WIEDERVERWENDETEM POLYVINYLBUTYRALPOLYMER
RÉCUPÉRATION DE POLYMÈRE POLY(BUTYRAL DE VINYLE) RECYCLÉ

(30) Priority: 28.10.2021 US 202163263162 P; 14.07.2022 US 202263368383 P; 28.09.2022 US 202263377410 P; 28.09.2022 US 202263377402 P; 28.09.2022 US 202263377405 P
(43) Date of publication of application: 04.09.2024
(73) Proprietor: Solutia Inc., St. Louis, Missouri 63141 (US)
(72) Inventor: MA, Yinong, Longmeadow, MA 01106 (US)
(74) Representative: Wallinger Ricker Schlotter Tostmann
(86) International application number: PCT/US2022/047969
(87) International publication number: WO 2023/076439

(56) References cited:
- EP-B1- 2 933 272
- US-A- 4 205 146
- US-A1- 2009 209 667
- US-A1- 2019 106 561

## Description

### FIELD OF THE INVENTION

The present invention is related to the field of poly(vinyl butyral) resin manufacture, and, specifically, the present invention is in the field of the recovery and reuse of post-consumer poly(vinyl butyral).

### DESCRIPTION OF RELATED ART

Laminated glass panels, such as automobile windshields and architectural safety glass, are typically composed of two sheets of glass laminated together with an interposed, plasticized polymer layer. Poly(vinyl butyral) ("PVB") is a common polymer that typically forms the main component in the polymeric interlayer of the vast majority of automotive windshields and architectural safety glass. Commonly, PVB resin is manufactured through a synthesis process that begins with the separation of ethane directly from natural gas or from the petroleum refining process. Ethane is then steam cracked to produce ethene (ethylene), which, along with acetic acid feedstock, is used to produce vinyl acetate monomers. Vinyl acetate monomers, through free-radical polymerization, are polymerized to poly(vinyl acetate). Poly(vinyl acetate) is hydrolyzed to poly(vinyl alcohol), which is then reacted with butyraldehyde to form poly(vinyl butyral).

The above-described synthesis process is energy intensive and dependent upon the use of non-renewable feedstocks. Consequently, the prospect of recycling PVB resin from post-consumer, recycled PVB has been long considered in the art as a potentially valuable source of PVB that would be less costly to produce than virgin PVB resin and that could significantly reduce the environmental footprint of PVB production. Exemplary sources of post-consumer, recycled PVB include previously-used automotive windshields and architectural safety glass, as well as other previously-used consumer products such as electric power devices (e.g., solar photovoltaic devices) and electronic display devices.

Despite the long felt need in the art, there are several problems with recycling post-consumer PVB. For example, post-consumer PVB generally comprises different mixtures of distinct PVB compositions, as obtained from various products and/or differing manufacturers. As a result, post-consumer PVB mixtures comprise PVB of different poly(vinyl butyral) compositions, including different polyvinyl alcohol contents. Such compositional differences within the mixtures of recycled PVB invariably lead to unacceptable high haze and/or discoloration of the PVB despite the PVB being removed of other contaminants. Specifically, when PVB materials of significant compositional difference are mixed together, the chemical incompatibility results in hazy or cloudy material due to immiscible microdomains with different refractive indices, which greatly limits its utility in recycling.

In view of the above, there exists a need to process post-consumer PVB in a manner that can reduce or eliminate compositional differences in the recycled PVB material, such that the resulting PVB is a clear polymer with a uniform composition and can be used to make new PVB interlayers, such as may be incorporated within new laminated glass panels.

US 2009/209667 A1 discloses a method of recycling poly(vinyl butyral) resin and incorporating that poly(vinyl butyral) resin into laminated glass and other articles. Poly(vinyl butyral) resin is recovered from discarded laminated glass through a process that includes all or most of the steps of granulation of the laminated glass, solvent extraction of plasticizer and impurities, dissolution of poly(vinyl butyral), pre-filtration of insoluble contaminants, color removal via adsorption or bleaching, post-filtration of carbon particles, precipitation of poly(vinyl butyral), and washing, stabilization, and drying of poly(vinyl butyral) resin.

US 4 205 146 A discloses a preparation of polyvinylbutyral by the acetalization of polyvinyl alcohol with n-butyraldehyde, either in an organic solvent or in water, wherein by varying the reaction conditions the polyvinylbutyral is obtained in a coarse-grain or fine-grained form. The production of polyvinylbutyral having improved properties is possible by using a polyvinylbutyral having a content of from 17 to 24% by weight of vinyl alcohol units as starting material for an after-treatment in the presence of an organic sulfonic acid having an emulsifying effect. The polyvinylbutyral obtained is particularly suitable for the manufacture of compound sheets.

US 2019/106561 A1 discloses resin compositions, layers, and interlayers comprising a poly(vinyl acetal) resin that includes residues of an aldehyde other than n-butyraldehyde. Such compositions, layers, and interlayers can exhibit enhanced or optimized properties as compared to those formulated with comparable poly(vinyl n-butyral) resins.

### BRIEF DESCRIPTION OF THE DRAWINGS

FIG. 1 is a flowchart of a method for recovering post-consumer PVB according to embodiments of the present invention;
FIG. 2 is a schematic illustration of a laminated glass panel comprising a pair of glass plates opposing a polymer interlayer, with the polymer interlayer comprising a trilayer with a pair of skin layers opposing a core layer; and
FIG. 3 is another schematic illustration of a laminated glass panel comprising a pair of glass plates opposing a polymer interlayer, with the polymer interlayer having a wedge shape.

### SUMMARY

The present invention concerns a method of recovering poly(vinyl butyral) (PVB). The method comprises a step of providing recycled PVB to a reclamation system. An additional step includes adding a solvent to the recycled PVB to dissolve the recycled PVB and form a PVB solution. An additional step includes adding a catalyst and butyraldehyde to the PVB solution to form a PVB reaction mixture. An additional step includes heating the PVB reaction mixture. An additional step includes filtering the PVB reaction mixture to remove solids. A further step includes removing the solvent and the butyraldehyde from the PVB reaction mixture to obtain recovered PVB.

This method is defined in claim 1. Preferred embodiments are defined in the claims depending thereon.

### DETAILED ESCRIPTION

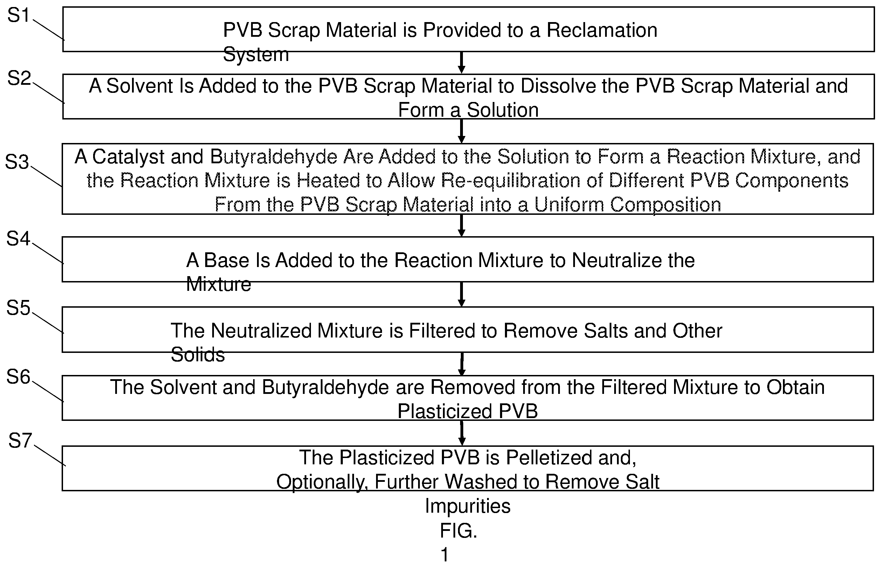

Embodiments of the present invention are directed to methods of recovering, recycling, and/or re-using poly(vinyl butyral) ("PVB"). More particularly, embodiments of the present invention are directed to methods of recycling post-consumer, recycled PVB to obtain PVB of sufficient quality to form polymer interlayers and/or laminated glass panels comprising polymer interlayers. In more detail, FIG. 1 illustrates an exemplary method of recycling PVB according to embodiments of the present invention. The method includes a step S1 of providing post-consumer, recycled PVB material to a reclamation system. The post-consumer PVB may include at least some plasticizer. The method may include an additional step S2 of adding a solvent to the recycled PVB material to dissolve the recycled PVB material and form a PVB solution. An additional step S3 may comprise adding a catalyst and butyraldehyde to the PVB solution to form a PVB reaction mixture. During and/or after step S3, the PVB reaction mixture may be heated to allow re-equilibration of different PVB components from the recycled PVB material into a uniform composition. An additional step S4 may comprise adding a base to the PVB reaction mixture to neutralize the mixture. An additional step S5 may comprise filtering the neutralized PVB reaction mixture to remove salts and other solids. An additional step S6 may comprise removing the solvent and butyraldehyde from the neutralized and filtered PVB mixture to obtain recovered PVB. The recovered PVB may retain a significant portion of the plasticizer that was originally included in the recycled PVB, such that the recovered PVB is at least partially plasticized. A further step S7 may comprise pelletizing the recovered PVB. In some embodiments, the step S7 may also include washing the pelletized PVB to remove other salt impurities. The resulting PVB, which was recovered during the above-described steps, may be of sufficient quality (e.g., of sufficient clarity and/or color) to be used in commercial products, such as in the manufacture of polymer interlayers and/or laminated glass panels comprising polymer interlayers.

In more detail, the recycled PVB provided to the reclamation system of step S1 may comprise post-consumer, recycled PVB. Such post-consumer recycled PVB may include material recovered from previously manufactured and/or used automotive windshields and architectural safety glass. The recycled PVB material may also include scrap or post-consumer materials from other consumer products such as electric power devices (e.g., solar photovoltaic devices), electronic display devices, etc. The recycled PVB material may have various PVB compositions, such as varying amounts of polyvinyl alcohol ("PVOH") amounts. For example, a first portion of the recycled PVB may have a PVOH amount from about 10 to 15 weight percent (wt. %), a second portion of the recycled PVB may have a PVOH amount from about 15 to 20 wt. %, and a third portion of the recycled PVB may have a PVOH amount from about 20 to 25 wt. %. Such different PVOH amounts would commonly result in a hazy, discolored polymer, if such recycled PVB were mixed together according to previously-used recovery methods. Other ranges of PVOH amounts (or different PVOH ranges) may also be possible, depending on the materials used and the sources of the materials.

The recycled PVB may also include an amount of plasticizer, which is generally used to soften the PVB and/or to lower the glass transition temperature T_{g} of the PVB. Contemplated plasticizers include, but are not limited to, esters of a polybasic acid, a polyhydric alcohol, triethylene glycol di-(2-ethylbutyrate), triethylene glycol di-(2-ethylhexonate) (known as "3-GEH"), triethylene glycol diheptanoate, tetraethylene glycol diheptanoate, dihexyl adipate, dioctyl adipate, hexyl cyclohexyladipate, mixtures of heptyl and nonyl adipates, diisononyl adipate, heptylnonyl adipate, dibutyl sebacate, and polymeric plasticizers such as oil-modified sebacic alkyds and mixtures of phosphates and adipates, and mixtures and combinations thereof. In some embodiments, 3-GEH is particularly preferred. Other examples of suitable plasticizers can include, but are not limited to, tetraethylene glycol di-(2-ethylhexanoate) ("4-GEH"), di(butoxyethyl) adipate, and bis(2-(2-butoxyethoxy)ethyl) adipate, dioctyl sebacate, nonylphenyl tetraethylene glycol, and mixtures thereof. Generally, the plasticizer content of PVB material (e.g., resin or scrap) will measured in parts per hundred resin parts ("phr"), on a weight per weight basis. For example, if 30 grams of plasticizer is added to 100 grams of polymer resin, the plasticizer content of the resulting plasticized polymer would be 30 phr. The recycled PVB material may have various amounts and/or types of plasticizer.

The recycled PVB material may be cut, chopped, and/or shredded to form small (such as 2 to 5 mm) diameter chips, granules, or flakes of PVB material (referred to herein as "flakes of PVB material"). The flakes of PVB material will generally be combined together to form flakes of a mixed composition (e.g., having a mixed amount of PVOH or other elements). Such flakes of PVB material may be provided to the reclamation system, which may be in the form of a single, batch reactor recycling system or a continuous reclamation recycling system. For example, the single, batch reactor may comprise a tank in the form of a continuous stirred-tank reactor (CSTR) or another similar reactor. One or more (or all) of the steps of the method described herein may be carried out within the single, batch reactor. Alternatively, a continuous reclamation system may be used, with the continuous reclamation system comprising a plurality of interconnected tanks (e.g., CSTRs). In the continuous reclamation system, each of the steps may be independently carried out within one or more of the plurality of tanks. Benefits of the continuous reclamation system may include higher throughput with respect to the single, batch reactor.

Turning to step S2, the solvent that is added to the recycled PVB material (e.g., to the single, batch reactor recycling system or the continuous reclamation recycling system) may comprise various solvents sufficient to dissolve the recycled PVB material and to form a solution. Examples of suitable solvents may include alcohols, e.g., ethanol, methanol or isopropanol. The solvent is configured to dissolve the recycled PVB material to form a PVB solution that has the form of a hazy, viscous solution. In some embodiments, some amount of water may also be added to the PVB solution.

Turning to step S3, the catalyst and the butyraldehyde may be added to the PVB solution to form a PVB reaction mixture. The catalyst may comprise various catalysts, such as sulfuric acid, sulfonic acid, methane sulfonic acid, or p-tolylsulfonic acid (p-toluenesulfonic acid). Upon adding the catalyst and butyraldehyde, the PVB reaction mixture may comprise about 15 to 25 wt. % recycled PVB material (or from 17 wt. % to 23 wt.%, or from 18 wt. % to 22 wt. %, or about 20 wt. % recycled PVB material), about 75 to 85 wt. % solvent (or from 77 wt. % to 83 wt. %, or from 78 wt. % to 82 wt. %, or about 80 wt. % solvent), about 1 wt. % butyraldehyde (or from 0.25 wt. % to 2.0 wt. %, or from 0.5 wt. % to 1.5 wt. %, or from 0.75 wt. % to 1.25 wt. % butyraldehyde), about 0.3 wt. % water (or from 0.1 wt. % to 0.5 wt. % or from 0.2 wt. % to 0.4 wt. % water), and/or about 0.05 wt. % catalyst. In some specific embodiments, the amount of catalyst may be at least 0.02 wt. %, at least 0.03 wt. %, at least 0.04 wt. %, at least 0.05 wt. %, at least 0.06 wt. %, at least 0.07 wt. %, at least 0.08 wt. % of the PVB reaction mixture. In other embodiments, the catalyst may form from 0.02 wt. % to 0.08 wt. %, from 0.03 wt. % to 0.07 wt. %, from 0.04 wt. % to 0.06 wt. %, or about 0.05 wt. % of the PVB reaction mixture.

Remaining with step S3, the PVB reaction mixture may be heated for a period of time. The mixture may be heated to a temperature of between 65°C and 85°C, between 70°C and 80°C, between 70°C and 78°C, or about 78°C. The period of time of heating may be at least 1 hour, at least 2 hours, at least 3 hours, and/or between 1 and 5 hours, between 2 and 4 hours, or about 3 hours. The heating, catalyst, and butyraldehyde permit the PVB reaction mixture to re-equilibrate the various PVB components of the recycled PVB material into a uniform composition. For instance, the PVB reaction mixture will re-equilibrate such that the PVB portion of the mixture will reach a uniform PVOH percentage.

Turning to step S4, the step comprises cooling the PVB reaction mixture and adding a base to neutralize the mixture. In some embodiments, the PVB reaction mixture may be cooled to a temperature below the temperature to which it was heated in step S3. In some embodiments, the base may comprise potassium hydroxide ("KOH"), sodium hydroxide, or the like. In some embodiments, the amount of base added to the mixture may comprise about 0.05 wt. % of the mixture. In some specific embodiments, the amount of base may be at least 0.02 wt. %, at least 0.03 wt. %, at least 0.04 wt. %, at least 0.05 wt. %, at least 0.06 wt. %, at least 0.07 wt. %, at least 0.08 wt. % of the PVB reaction mixture. In other embodiments, the base may form from 0.02 wt. % to 0.08 wt. %, from 0.03 wt. % to 0.07 wt. %, from 0.04 wt. % to 0.06 wt. %, or about 0.05 wt. % of the PVB reaction mixture. Regardless, embodiments may provide for a sufficient amount of base to be added such that the pH of the PVB reaction mixture (which is about 2.0 to 2.5 before neutralization) reaches from about 5.0 to about 7.o, or at least about 5, 5.1, 5.2, 5.3, 5.4, 5.5, 5.6, 5.7, 5.8, 5.9, 6.0, 6.1, 6.2, 6.3, 6.4, 6.5, 6.5, 6.7, 6.8, 6.9 or 7.0, or about 5.1 to about 6.9, or about 5.2 to about 6.8, or about 5.3 to about 6.7, or about 5.4 to about 6.7, or about 5.5 to about 6.7, or about 5.6 to about 6.7, or about 5.7 to about 6.7, or about 5.8 to about 6.7, or about 5.9 to about 6.7.

Turning to step S5, the step comprises filtering the neutralized PVB reaction mixture to remove salts and other solids from the mixture. In some embodiments, the filter may comprise a screen, mesh, cloth, or other similar filtering element. With respect to step S6, the solvent and butyraldehyde may be removed from the neutralized and filtered PVB mixture to obtain recovered PVB. As will be described in more detail below, the recovered PVB may be plasticized (i.e., the recovered PVB retains at least some of the original plasticizer included as part of the original recycled PVB). The solvent and butyraldehyde may be removed via evaporative distillation (e.g., via an evaporation column), water-vapor stripping, extrusion evaporation, or the like. In some embodiments, solvent and butyraldehyde may be recycled and re-used (e.g., in additional steps S2-S6) to recover additional PVB from recycled PVB.

Finally, turning to step S7, the recovered PVB may be pelletized so as to be used in an extrusion process (e.g., via an extruder or co-extruder) to form PVB interlayers and/or laminated glass panels that include PVB interlayers. The recovered PVB may be pelletized via a pelletizer. In some embodiments, the step S7 may also include a further washing step, whereby the pelletized, recovered PVB is again washed to remove remaining salt or other impurities. Regardless, the resulting recovered PVB may be of sufficient quality and/or clarity to be used in commercial products, such as in the manufacture of polymer interlayers and/or laminated glass panels comprising polymer interlayers. Notably, the recovered PVB may retain nearly all the plasticizer that was originally included in the PVB. For example, in some embodiments, the recovered PVB may lose no more than from 1 to 20%, no more than from 2 to 15%, no more than from 3 to 10%, or about 5% of the plasticizer included in the original recycled PVB. For example, the recovered PVB resulting from the recovery method described above may have the same or almost the same amount of plasticizer originally present in the recycled PVB.

In certain embodiments, variations, additions, and/or subtractions may be made to the steps S1 to S7 described above. For example, in some embodiments, after the PVB reaction mixture is neutralized, deionized water may be added to the neutralized PVB reaction mixture to affect precipitation of the mixture. Specifically, for example, water may be added to the neutralized PVB reaction mixture in a high-intensity mixing tank to effect precipitation whereby a slurry is yielded, with the slurry containing separated solvent, butyraldehyde, plasticized PVB, and water. A fill and drain washing process with the water may alternatively be used to facilitate such precipitation. Regardless, the recovered PVB may be filtered and dried to yield a PVB resin with some amount of plasticizer that was originally included in the recycled PVB (e.g., from 3 to 5 phr).

The PVB that was recovered using the recovering method steps described above may be used to form a polymer interlayer and/or a laminated glass panel comprising a polymer interlayer. The terms "polymer interlayer sheet," "interlayer," "polymer layer", and "polymer melt sheet" as used herein, may designate a single-layer sheet or a multilayered interlayer. A "single-layer sheet," as the name implies, is a single polymer layer extruded as one layer. A multilayered interlayer, on the other hand, may comprise multiple layers, including separately extruded layers, co-extruded layers, or any combination of separately and co-extruded layers. Thus, the multilayered interlayer could comprise, for example: two or more single-layer sheets combined together

("plural-layer sheet"); two or more layers co-extruded together ("co-extruded sheet"); two or more co-extruded sheets combined together; a combination of at least one single-layer sheet and at least one co-extruded sheet; and a combination of at least one plural-layer sheet and at least one co-extruded sheet. In various embodiments of the present invention, a multilayered interlayer comprises at least two polymer layers (e.g., a single layer or multiple layers co-extruded) disposed in direct contact with each other, wherein each layer comprises a polymer resin. The term "resin," as utilized herein refers to the polymeric component (e.g., PVB) removed from the mixture that results from the acid catalysis and subsequent neutralization of polymeric precursors. Generally, plasticizer, such as those discussed more above, will be added to the resins to result in a plasticized polymer. Additionally, resins may have other components in addition to the polymer and plasticizer including; e.g., acetates, salts and alcohols.

Although the above described recycling steps can be performed to yield recovered PVB with at least some inherent plasticizer (e.g., 3 to 5 phr of plasticizer), embodiments may require additional plasticizer to be added to the PVB before the PVB is used to form a polymer interlayer and/or a laminated glass panel comprising a polymer interlayer. For example, in some embodiments, an additional amount of from 25 to 50 phr, 25 to 45 phr, 30 to 40 phr, or 33 to 35 phr may be added to the resulting PVB before the polymer interlayer and/or the laminated glass panel is manufactured. Higher or lower amounts of plasticizer may be added as desired, depending on the desired properties and application.

Once a sufficient amount of plasticizer is added to the recovered PVB, it is contemplated that polymer interlayer sheets may be produced by any suitable process known to one of ordinary skill in the art of producing polymer interlayer sheets that are capable of being used in a multiple layer panel (such as a glass laminate). For example, it is contemplated that the polymer interlayer sheets may be formed through solution casting, compression molding, injection molding, melt extrusion, melt blowing or any other procedures for the production and manufacturing of a polymer interlayer sheet known to those of ordinary skill in the art. Further, in embodiments where multiple polymer interlayers are utilized, it is contemplated that these multiple polymer interlayers may be formed through co-extrusion, blown film, dip coating, solution coating, blade, paddle, air-knife, printing, powder coating, spray coating or other processes known to those of ordinary skill in the art. While all methods for the production of polymer interlayer sheets known to one of ordinary skill in the art are contemplated as possible methods for producing the polymer interlayer sheets described herein, this application will focus on polymer interlayer sheets produced through extrusion and/or co-extrusion processes.

In the extrusion process, thermoplastic resin and plasticizers, including any of those resins and plasticizers described above, are generally pre-mixed and fed into an extruder device. Additives such as colorants and UV inhibitors (in liquid, powder, or pellet form) may be used and can be mixed into the thermoplastic resin or plasticizer prior to arriving in the extruder device. These additives are incorporated into the thermoplastic polymer resin, and by extension the resultant polymer interlayer sheet, to enhance certain properties of the polymer interlayer sheet and its performance in the final multiple layer glass panel product.

In the extruder device, the particles of the thermoplastic raw material and plasticizers, including any of those resins, plasticizers, and other additives described above, are further mixed and melted, resulting in a melt that is generally uniform in temperature and composition. Embodiments of the present invention may provide for the melt temperature to be approximately 200°C. Once the melt reaches the end of the extruder device, the melt is propelled into the extruder die. The extruder die is the component of the extruder device which gives the final polymer interlayer sheet product its profile. The die will generally have an opening, defined by a lip, that is substantially greater in one dimension than in a perpendicular dimension. Generally, the die is designed such that the melt evenly flows from a cylindrical profile coming out of the die and into the product's end profile shape. A plurality of shapes can be imparted to the end polymer interlayer sheet by the die so long as a continuous profile is present. Generally, in its most basic sense, extrusion is a process used to create objects of a fixed cross-sectional profile. This is accomplished by pushing or drawing a material through a die of the desired cross-section for the end product.

In some embodiments, a co-extrusion process may be utilized. Co-extrusion is a process by which multiple layers of polymer material are extruded simultaneously. Generally, this type of extrusion utilizes two or more extruders to melt and deliver a steady volume throughput of different thermoplastic melts of different viscosities or other properties through a co-extrusion die into the desired final form. For example, the multiple layer interlayers of the present invention (e.g., in the form of a trilayer interlayer) may be preferably co-extruded using a multiple manifold co-extrusion device which includes a first die manifold, a second die manifold, and a third die manifold. The co-extrusion device may operate by simultaneously extruding polymer melts from each manifold through a die and out of an opening, where the multiple layer interlayer is extruded as a composite of three individual polymer layers. The polymer melts may flow through the die such that the core layer is positioned between the skin layers, so as to result in the manufacture of a trilayer interlayer with the core layer sandwiched between the skin layers. The die opening may include a pair of lips positioned on either side of the opening. Given the positional orientation of the polymer melts, the skin layers may come into contact with the lips. Regardless, the interlayer thickness can be varied by adjusting the distance between die lips located at the die opening.

Often, polymer interlayers having three layers will be used in the manufacture of a laminated glass panel. For example, in some embodiments of this application, the increased acoustic attenuation properties of soft layers are combined with the mechanical strength of stiff/rigid layers to create a multilayered interlayer. In these embodiments, a central soft layer is sandwiched between two stiff/rigid outer layers. This configuration of (stiff)//(soft)//(stiff) creates a multilayered interlayer that is easily handled, can be used in conventional lamination methods and that can be constructed with layers that are relatively thin and light. The soft, core layer is generally characterized by a lower residual hydroxyl content, a higher plasticizer content, and/or a lower glass transition temperature than the relatively stiffer, skin layers.

The following offers a simplified description of the manner in which multiple layer glass panels are generally produced in combination with the interlayers formed according to the processes described above. First, as discussed above, a multiple layer interlayer may be co-extruded using a multiple manifold co-extrusion device. The device operates by simultaneously extruding polymer melts from each manifold toward an extrusion opening. Properties of the layers can be varied by adjusting attributes (e.g., temperature and/or opening dimensions) of the die lips at the extrusion opening. Once formed, the interlayer sheet can be placed between two glass substrates and any excess interlayer is trimmed from the edges, creating an assembly. It is not uncommon for multiple polymer interlayer sheets or a polymer interlayer sheet with multiple layers (or a combination of both) to be placed within the two glass substrates creating a multiple layer glass panel with multiple polymer interlayers. Then, air is removed from the assembly by an applicable process or method known to one of skill in the art; e.g., through nip rollers, vacuum bag or another deairing mechanism. Additionally, the interlayer is partially press-bonded to the substrates by any method known to one of ordinary skill in the art. In a last step, in order to form a final unitary structure, this preliminary bonding is rendered more permanent by a high temperature and pressure lamination process, or any other method known to one of ordinary skill in the art such as, but not limited to, autoclaving.

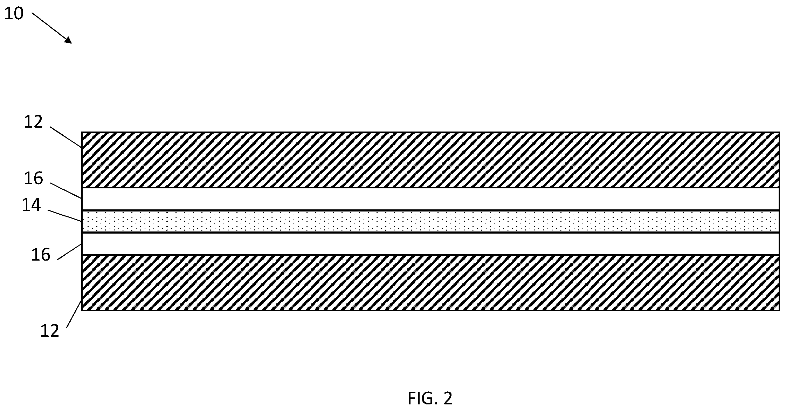

In view of the above, multiple layer panels are comprised of two sheets of glass, or other applicable substrates, with a polymer interlayer sheet or sheets sandwiched there-between. Multiple layer panels are generally produced by placing at least one polymer interlayer sheet between two substrates to create an assembly. FIG. 2 illustrates a multiple layer panel 10 comprising a pair of glass sheets 12 with a multilayered interlayer sandwiched therebetween. The multilayered interlayer is configured as a trilayer interlayer having three individual polymer interlayer sheets, including a soft core layer 14 and two relatively stiffer skin layers 16 positioned on either side of the core layer 14. Such glass panels that incorporate such a trilayer may, as discussed above, have superior acoustic properties due to the sound dampening provided by the soft, core layer.

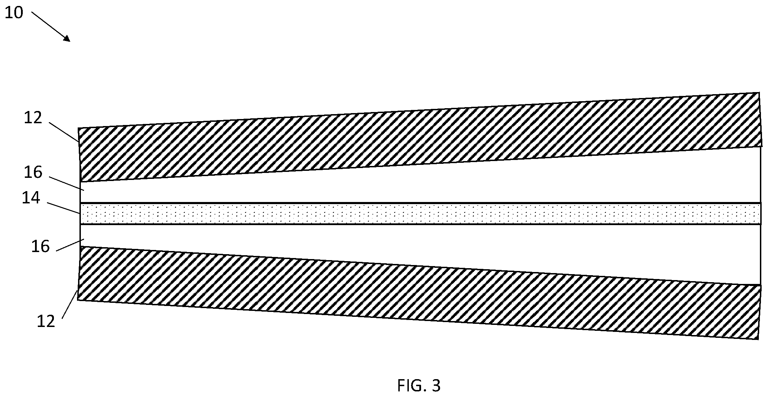

In some embodiments, the interlayer (e.g., the core layer 14 and the skin layers 16) will have a generally constant or uniform thickness about the length of the interlayer (See, e.g., FIG. 2). However, in alternative embodiments, as shown in FIG. 3, the interlayer may have at least one region of non-uniform thickness. For example, the interlayer, comprised of the core layer 14 and skin layers 16, may be wedge-shaped, such that the thickness of the interlayer changes (e.g., linearly) about the length of the interlayer. In some such embodiments, the thickness of the interlayer may change due to a thickness change in the core layer 14 (i.e., with the skin layers 16 having a generally constant thickness). Alternatively, the thickness of the interlayer may change due to a thickness change in the skin layers 16 (i.e., with the core layer 14 having a generally constant thickness). In further alternatives, the thickness of the interlayer may change due to a thickness change in both the core layer 14 and the skin layers 16. Such glass panels that incorporate such a trilayer may, as discussed above, have superior acoustic properties due to the sound dampening provided by the soft, core layer. In addition, due to the non-uniform thickness of the trilayer, the glass panels may provide beneficial characteristics for use in heads-up displays ("HUDs") by reducing unwanted image projection defects (e.g., reducing ghost images).

Beneficially, laminated glass panels formed with at least one polymer layer/interlayer containing the recovered PVB, obtained from the recovering method discussed above, may have superior optical qualities. Clarity is one measure of optical quality of a laminate. Clarity can be determined by measuring a haze value or percent of the laminate. Haze is a percentage of transmitted light that is scattered so that its direction deviates more than a specified angle from the direction of the incident beam. Haze may be measured using a haze meter or a spectrophotometer, known to one of skill in the art, and in accordance with ASTM D1003-Procedure B using Illuminant C, at an observer angle of 2 degrees. In some embodiments, glass panels, polymer layers, and/or interlayers that incorporate recovered PVB, as described herein, may have a haze value of less than 5 percent, less than about 4 percent, less than about 3 percent, less than about 2 percent, less than about 1, or less than about 0.5 percent.

Color is another measure of optical quality of a laminate. Significant discoloration or yellowing of the laminate is often undesirable. Such discoloration is generally measured according to yellowness index ("YI") using an optical meter or a spectrophotometer, known to one of skill in the art, and in accordance with ASTM D1925. In some embodiments, glass panels, polymer layers, and/or interlayers that incorporate recovered PVB, as described herein, may have a YI of less than 12, less than 10, less than 8, less than 6, less than 5, less than about 4, less than about 3, less than about 2, less than about 1, or less than about 0.5. In the examples provided below, the haze and YI values were measured as discussed above, in accordance with ASTM D1003 and ASTM D1925, respectively.

### EXAMPLES

### Example 1

A mixture of 800 parts of SD29 alcohol, 200 parts of recycled PVB flakes (consisting of 55 parts plasticizer and 145 parts of resin mixture of an average 19 wt. % PVOH), 15 parts of butyraldehyde, 3 parts of water and 0.5 part of sulfuric acid were charged to a one liter three-neck jacketed glass reactor. The mixture was stirred and heated to 78°C, where the mixture was held for two to four hours. The resulting mixture was cooled to 65°C and neutralized with 0.46 part of KOH until the mixture reached a pH of 6. The resulting cloudy mixture was filtered to yield a clear viscous solution. The solution was cast into a PVB film, along with 35 phr of additional plasticizer, and allowed to evaporate to result in a clear film. The film was pressed into a plasticized PVB sheet having a thickness of 0.772 mm and laminated between two pieces of 2.3 mm glass. The haze of the laminate was measured at a value of below 1.0%, and the YI of the laminate was measured at a value of below 2.

### Example 2

A mixture of 800 parts of SD29 alcohol, 200 parts of recycled tri-layer acoustic PVB flakes (consisting of 60 parts plasticizer and 140 parts of resin mixture of an average 17.4 wt. % PVOH), 15 parts of butyraldehyde, 3 parts of water and 0.5 part of sulfuric acid were charged to a one liter three-neck jacketed glass reactor. The mixture was stirred and heated to 78°C, where the mixture was held for two to four hours. The resulting mixture was cooled to 65°C and neutralized with 0.46 part of KOH until the mixture reached a pH of 6. The resulting cloudy mixture was then filtered to yield a clear viscous solution. The solution was cast, along with 35 phr of additional plasticizer, into a PVB film and allowed to dry to result in a clear film. The film was pressed into a plasticized PVB sheet having a thickness of 0.772 mm and laminated between two pieces of 2.3 mm glass. The haze of the laminate was measured at a value of below 1.0%, and the YI of the laminate was measured at a value of below 2.

### Example 3

A mixture of 800 parts of SD29 alcohol, 150 parts PVB resin of 18.7 wt. % PVOH and 20 parts of recycled tri-layer acoustic PVB flakes (consisting of 6 parts plasticizer and 14 parts of resin mixture of an average 17.4 wt. % PVOH), 15 parts of butyraldehyde, 3 parts of water and 0.5 part of sulfuric acid were charged to a one liter three-neck jacketed glass reactor. The mixture was stirred and heated to 78°C, where the mixture was held for two to four hours. The resulting mixture was cooled to 65°C and neutralized with 0.46 part of KOH until the mixture reached a pH of 6. The cloudy mixture was further mixed with 8 equivalents of water in a high intensity mixer to form a PVB slurry. Alcohol and residual butyraldehyde were removed with fill and drain washing with deionized water, and the resulting slurry was filtered. After drying, the PVB was pressed, along with 35 phr of additional plasticizer, into a plasticized PVB sheet having a thickness of 0.772 mm. The PVB sheet was laminated between two pieces of 2.3 mm glass. The haze of the laminate was measured at a value of below 1.0%, and the YI of the laminate was measured at a value of below 1.

### Example 4

A mixture of 800 parts of SD29 alcohol, 150 parts PVB resin of 18.7 wt. % PVOH and 15 parts of recycled tri-layer acoustic PVB flakes (consisting of 4.5 parts plasticizer and 10.5 parts of resin mixture of an average 17.4 wt. % PVOH), 15 parts of butyraldehyde, 3 parts of water and 0.5 part of sulfuric acid were charged to a one liter three-neck jacketed glass reactor. The mixture was stirred and heated to 78°C, where the mixture was held for two to four hours. The resulting mixture was cooled to 65°C and neutralized with 0.46 part of KOH until the mixture reached a pH of 6. The cloudy mixture was further mixed with 8 equivalents of water in a high intensity mixer to form a PVB slurry. Alcohol and residual butyraldehyde were removed with fill and drain washing with deionized water, and the resulting slurry was filtered. After drying, the PVB was pressed, along with 36 phr of additional plasticizer, into plasticized PVB sheet having a thickness of 0.772 mm. The PVB sheet was laminated between two pieces of 2.3 mm glass. The haze of the laminate was measured at a value of below 1.0%, and the YI of the laminate was measured at a value of below 1.

### Example 5

A mixture of 800 parts of SD29 alcohol, 200 parts of recycled tri-layer acoustic PVB flakes (consisting of 60 parts plasticizer and 140 parts of resin mixture of an average 17.4 wt. % PVOH), 15 parts of butyraldehyde, 3 parts of water and 0.5 part of sulfuric acid were charged to a one liter three-neck jacketed glass reactor. The mixture was stirred and heated to 78°C, where the mixture was held for two to four hours. The resulting mixture was cooled to 65°C and neutralized with 0.46 part of KOH until the mixture reached a pH of 6. The cloudy mixture was further mixed with 8 equivalents of water in a high intensity mixer to form a PVB slurry. Alcohol and residual butyraldehyde were removed with fill and drain washing with deionized water, and the resulting slurry was filtered. After drying, the PVB was pressed, along with 40 phr of additional plasticizer, into a sheet having a thickness of 0.772 mm. The PVB sheet was laminated between two pieces of 2.3 mm glass. The haze of the laminate was measured at a value of below 1.0%, and the YI of the laminate was measured at a value of below 1.

## Claims

1. A method of recovering poly(vinyl butyral) (PVB), said method comprising the steps of:
(a) providing recycled PVB to a reclamation system;
(b) adding a solvent to the recycled PVB to dissolve the recycled PVB and form a PVB solution;
(c) adding a catalyst and butyraldehyde to the PVB solution to form a PVB reaction mixture;
(d) heating the PVB reaction mixture;
(e) filtering the PVB reaction mixture to remove solids; and
(f) removing the solvent and the butyraldehyde from the PVB reaction mixture to obtain recovered PVB.

2. The method of claim 1, wherein PVB material forming the recycled PVB provided during step (a) comprises material having different polyvinyl alcohol contents.

3. The method of claim 1 or claim 2, wherein the reclamation system to which the recycled PVB is provided in step (a) comprises a batch reactor system.

4. The method of any of claims 1 to 3, wherein the catalyst added during step (c) comprises sulfuric acid.

5. The method of any of claims 1 to 4, wherein said heating of step (d) comprises heating the PVB reaction mixture to a temperature between 70°C and 80°C, or wherein said heating of step (d) comprises heating the PVB reaction mixture for a time period between 2 and 4 hours.

6. The method of any of claims 1 to 5, wherein the solids filtered during step (e) comprise salts.

7. The method of any of claims 1 to 6, wherein the solvent and the butyraldehyde removed during step (f) are further recycled to use in recovering additional PVB.

8. The method of any of claims 1 to 7, further including the step of neutralizing the PVB reaction mixture by adding a base to the PVB reaction mixture, or further including the step of washing the pelletized PVB to remove salt impurities.

9. The method of claim 8, wherein the base comprises potassium hydroxide.

10. The method of any of claims 1 to 9, further including the step of pelletizing the recovered PVB.

11. The method of any of claims 1 to 10, wherein the solvent added during step (b) comprises alcohol, preferably wherein the alcohol is ethanol, methanol or isopropanol.

12. The method of claim 1, wherein the recycled PVB provided in step (a) comprises a first amount of plasticizer, wherein the recovered PVB obtained in step (f) comprises a second amount of plasticizer, wherein the second amount of plasticizer differs from the first amount of plasticizer by less than about 10 percent.

## Patentansprüche

1. Verfahren zum Rückgewinnen von Polyvinylbutyral (PVB), wobei das Verfahren folgende Schritte umfasst:
(a) Bereitstellen von wiederverwendetem PVB in einem Wiedergewinnungssystem;
(b) Zugeben von einem Lösungsmittel zu dem wiederverwendeten PVB zum Lösen des wiederverwendeten PVB und Bilden einer PVB-Lösung;
(c) Zugeben von einem Katalysator und Butyraldehyd zu der PVB-Lösung zum Bilden eines PVB-Reaktionsgemisches;
(d) Erwärmen des PVB-Reaktionsgemisches;
(e) Filtrieren des PVB-Reaktionsgemisches zum Entfernen von Feststoffen; und
(f) Entfernen des Lösungsmittels und des Butyraldehyds aus dem PVB-Reaktionsgemisch zum Erhalten des rückgewonnenen PVB.

2. Verfahren nach Anspruch 1, wobei PVB-Material, das während Schritt (a) bereitgestellt wird und das wiederverwendete PVB bildet, Material mit unterschiedlichen Polyvinylalkoholgehalten umfasst.

3. Verfahren nach Anspruch 1 oder Anspruch 2, wobei das Wiedergewinnungssystem, in dem das wiederverwendete PVB in Schritt (a) bereitgestellt wird, ein Batch-Reaktorsystem umfasst.

4. Verfahren nach einem der Ansprüche 1 bis 3, wobei der Katalysator, der während Schritt (c) zugegeben wird, Schwefelsäure umfasst.

5. Verfahren nach einem der Ansprüche 1 bis 4, wobei das Erwärmen in Schritt (d) Erwärmen des PVB-Reaktionsgemisches auf eine Temperatur zwischen 70 °C und 80 °C umfasst oder wobei das Erwärmen in Schritt (d) Erwärmen des PVB-Reaktionsgemisches über einen Zeitraum zwischen 2 und 4 Stunden umfasst.

6. Verfahren nach einem der Ansprüche 1 bis 5, wobei die Feststoffe, die während Schritt (e) filtriert werden, Salze umfassen.

7. Verfahren nach einem der Ansprüche 1 bis 6, wobei das Lösungsmittel und das Butyraldehyd, die während Schritt (f) entfernt werden, ferner zum Verwenden beim Rückgewinnen von zusätzlichem PVB wiederverwendet werden.

8. Verfahren nach einem der Ansprüche 1 bis 7, ferner beinhaltend den Schritt des Neutralisierens des PVB-Reaktionsgemisches durch Zugeben einer Base zu dem PVB-Reaktionsgemisch oder ferner beinhaltend den Schritt des Waschens des pelletierten PVB zum Entfernen von Salzverunreinigungen.

9. Verfahren nach Anspruch 8, wobei die Base Kaliumhydroxid umfasst.

10. Verfahren nach einem der Ansprüche 1 bis 9, ferner beinhaltend den Schritt des Pelletierens des rückgewonnenen PVB.

11. Verfahren nach einem der Ansprüche 1 bis 10, wobei das Lösungsmittel, das während Schritt (b) zugegeben wird, Alkohol umfasst, wobei der Alkohol vorzugsweise Ethanol, Methanol oder Isopropanol ist.

12. Verfahren nach Anspruch 1, wobei das in Schritt (a) bereitgestellte wiederverwendete PVB eine erste Menge Weichmacher umfasst, wobei das in Schritt (f) erhaltene rückgewonnene PVB eine zweite Menge Weichmacher umfasst, wobei sich die zweite Menge Weichmacher von der ersten Menge Weichmacher um weniger als etwa 10 Prozent unterscheidet.

## Revendications

1. Procédé de récupération de poly(butyral de vinyle) (PVB), ledit procédé comprenant les étapes suivantes :
(a) l'acheminement de PVB recyclé à un système de régénération ;
(b) l'ajout d'un solvant au PVB recyclé pour dissoudre le PVB recyclé et former une solution de PVB ;
(c) l'ajout d'un catalyseur et de butyraldéhyde à la solution de PVB pour former un mélange réactionnel de PVB ;
(d) le chauffage du mélange réactionnel de PVB ;
(e) la filtration du mélange réactionnel de PVB pour éliminer les matières solides ; et
(f) l'élimination du solvant et du butyraldéhyde du mélange réactionnel de PVB pour obtenir du PVB récupéré.

2. Procédé selon la revendication 1, dans lequel le matériau en PVB formant le PVB recyclé acheminé au cours de l'étape (a) comprend un matériau présentant différentes teneurs en alcool polyvinylique.

3. Procédé selon la revendication 1 ou la revendication 2, dans lequel le système de régénération auquel le PVB recyclé est acheminé à l'étape (a) comprend un système de réacteur discontinu.

4. Procédé selon l'une quelconque des revendications 1 à 3, dans lequel le catalyseur ajouté pendant l'étape (c) comprend de l'acide sulfurique.

5. Procédé selon l'une quelconque des revendications 1 à 4, dans lequel ledit chauffage de l'étape (d) comprend le chauffage du mélange réactionnel de PVB à une température comprise entre 70 °C et 80 °C, ou dans lequel ledit chauffage de l'étape (d) comprend le chauffage du mélange réactionnel de PVB pendant une période comprise entre 2 et 4 heures.

6. Procédé selon l'une quelconque des revendications 1 à 5, dans lequel les matières solides filtrées pendant l'étape (e) comprennent des sels.

7. Procédé selon l'une quelconque des revendications 1 à 6, dans lequel le solvant et le butyraldéhyde éliminés au cours de l'étape (f) sont en outre recyclés pour être utilisés dans la récupération de PVB supplémentaire.

8. Procédé selon l'une quelconque des revendications 1 à 7, comportant en outre l'étape de neutralisation du mélange réactionnel de PVB par l'ajout d'une base au mélange réactionnel de PVB, ou comportant en outre l'étape de lavage du PVB sous forme de granulés pour éliminer des impuretés salines.

9. Procédé selon la revendication 8, dans lequel la base comprend de l'hydroxyde de potassium.

10. Procédé selon l'une quelconque des revendications 1 à 9, comportant en outre l'étape de granulation du PVB récupéré.

11. Procédé selon l'une quelconque des revendications 1 à 10, dans lequel le solvant ajouté pendant l'étape (b) comprend de l'alcool, de préférence dans lequel l'alcool est de l'éthanol, du méthanol ou de l'isopropanol.

12. Procédé selon la revendication 1, dans lequel le PVB recyclé fourni à l'étape (a) comprend une première quantité de plastifiant, dans lequel le PVB récupéré obtenu à l'étape (f) comprend une seconde quantité de plastifiant, dans lequel la seconde quantité de plastifiant diffère de la première quantité de plastifiant de moins d'environ 10 %.
